# EUROPEAN PATENT APPLICATION

(11) **EP 4 811 031 A1**
(43) Date of publication of application: **23.09.2026**
(21) Application number: 25815253.7
(22) Date of filing: 28.05.2025
(51) Int. Cl.: G03B 17/48, B41J 11/00, B41J 29/393, G03B 17/50

(54) **INSTANT-IMAGING CAMERA, INSTANT-IMAGING SYSTEM, AND PRINTING METHOD BASED ON INSTANT-IMAGING SYSTEM**

(30) Priority: 31.05.2024 CN 202421237604 U; 31.05.2024 CN 202410700617; 31.05.2024 CN 202421246418 U; 31.05.2024 CN 202421243180 U
(71) Applicant: Godox Photo Equipment Co., Ltd., Shenzhen, Guangdong 518000 (CN)
(72) Inventor: ZENG, Weijun, Shenzhen, Guangdong 518000 (CN)
(74) Representative: Studio Torta S.p.A.
(86) International application number: PCT/CN2025/097726
(87) International publication number: WO 2025/247262

(57) **Abstract**

The present application belongs to the field of photographic and videographic devices, and relates to an instant-imaging camera, an instant-imaging system, and a printing method based on an instant-imaging system. The instant-imaging camera comprises a camera body, one or more print heads and a paper storage mechanism, wherein the camera body comprises a lens and an optical imaging module, the lens being used for acquiring an optical image and transmitting the optical image to the optical imaging module, and the optical imaging module generating a corresponding image signal; a first mounting cavity and a second mounting cavity are provided inside the camera body; and each print head can be mounted in the first mounting cavity in the alternative, is detachably connected to the first mounting cavity, and is in signal connection with the optical imaging module, such that tire print head can print a corresponding image onto a piece of printing paper. The paper storage mechanism is arranged inside the second mounting cavity, and the paper storage mechanism has accommodating chambers for accommodating and limiting printing paper of different sizes, such that the printing paper of different sizes is fixed in the paper storage mechanism to print photographs of different sizes.

## Description

This application claims priority to Chinese patent applications filed with the China National Intellectual Property Administration on May 31, 2024: Application No. 2024107006178, entitled "Instant-Imaging System and Printing Method Thereof"; Application No. 2024212464186, entitled "Instant-Imaging Camera"; Application No. 2024212376043, entitled "Instant-Imaging Camera"; and Application No. 2024212431801, entitled "Instant-Imaging Camera," the entire contents of which are incorporated by reference into this application.

### TECHNICAL FIELD

The present application relates to the field of photographic and video capture devices, and in particular, to an instant-imaging camera, an instant-imaging system, and a printing method of the instant-imaging system.

### BACKGROUND

Instant-imaging cameras are popular among young users because they allow users to obtain a photograph immediately after capturing an image, facilitating quick sharing.

Currently, an instant-imaging camera that uses thermal printing paper to print photographs has appeared on the market. Due to its low cost, it has been rapidly popularized in the market.

However, current thermal printing paper comes in different specifications, while current instant-imaging cameras can only be loaded with thermal printing paper of a single fixed specification, resulting in a limited application range and affecting user experience to some extent.

### SUMMARY

One objective of the present application is to solve the technical problem that an instant-imaging camera can only be loaded with thermal printing paper of a single fixed specification.

To solve the above technical problem, an instant-imaging camera is provided, including: a main body including a lens and an optical imaging module, where the lens is used to capture an optical image and transmit the optical image to the optical imaging module, and the optical imaging module generates a corresponding image signal, where the main body is internally provided with a first mounting cavity and a second mounting cavity; one or more print heads, one of which is selectively installed in the first mounting cavity, detachably connected to the first mounting cavity, and in signal connection with the optical imaging module so that the print head receives the image signal transmitted by the optical imaging module and prints a corresponding image on a printing paper; and a paper storage mechanism arranged in the second mounting cavity, the paper storage mechanism having a receiving chamber for accommodating and positioning printing paper of different sizes, thereby fixing printing paper of different sizes in the paper storage mechanism.

In some examples of the present application, the paper storage mechanism includes two or more paper storage cassettes, each of the paper storage cassettes being disposed in the second mounting cavity. Each of the paper storage cassettes has a receiving chamber that accommodates and limits printing paper, and the receiving chambers of different paper storage cassettes are capable of accommodating printing papers of different sizes; the print head is located outside the paper storage cassette, each of the paper storage cassettes corresponds to a size of one print head, and the printing paper in the paper storage cassette is output out of the main body after passing through the print head.

In some examples of the present application, the paper storage cassette includes a first paper storage cassette and a second paper storage cassette. The first paper storage cassette is fixed in the second mounting cavity of the main body and is configured to accommodate a first size of printing paper, so that it can match the print head of the first size. The second paper storage cassette is detachably connected to the main body and is configured to accommodate a second size of printing paper. The first size is larger than the second size.

In some examples of the present application, a first connecting portion is arranged on the second paper storage cassette. The first connecting portion is a hole-shaped structure formed in the second paper storage cassette. The first connecting portion is provided in a plurality. The first connecting portions on each second paper storage cassette have the same size, and adjacent first connecting portions on each second paper storage cassette are equally spaced. A second connecting portion corresponding to the first connecting portion is arranged on the main body. The second connecting portion is a hole-shaped structure formed in the main body. The instant-imaging camera further includes a first connecting piece. The first connecting piece is inserted and fixed into the first connecting portion and the second connecting portion, such that the second paper storage cassette is detachably connected in the first paper storage cassette.

In some examples of the present application, the paper storage mechanism includes a blocking piece movably connected in the second mounting cavity. The blocking piece is capable of moving along an axial direction of the second mounting cavity, so that the blocking piece can abut against and fix end surfaces of printing papers of different sizes, thereby fixing printing papers of different sizes in the second mounting cavity.

In some examples of the present application, two blocking pieces are provided. The two blocking pieces are respectively disposed at two ends of the second mounting cavity in the axial direction. A spacing between the two blocking pieces forms the receiving chamber. The two blocking pieces respectively abut against two end surfaces of the printing paper in the receiving chamber to secure the printing paper.

In some examples of the present application, the blocking piece includes a plate body, a mounting post connected to the plate body, and an elastic piece sleeved on the mounting post. The mounting post extends along the axial direction of the second mounting cavity. Through holes matching the mounting post are defined in side walls at two ends of the second mounting cavity. The mounting post is slidably connected in the through holes. The mounting post is movable along the through holes. The elastic piece abuts against the side wall of the second mounting cavity and the plate body, respectively. After printing paper is loaded into the second mounting cavity, the plate body moves away from the side wall of the second mounting cavity, the elastic piece recovers from elastic deformation, and causes the plate body to abut against the end surface of the printing paper.

In some examples of the present application, the blocking piece further includes a slider. The slider is disposed on a side of the plate body facing towards a bottom wall of the second mounting cavity. A guide groove matching the slider is defined in the bottom wall of the second mounting cavity of the main body. The slider is slidably connected in the guide groove.

In some examples of the present application, a plurality of sensing contacts are arranged in the guide groove. The sensing contacts are configured to identify position information of the plate body.

In some examples of the present application, the instant-imaging camera further includes a second connecting piece. A third connecting portion is arranged on the print head. A fourth connecting portion corresponding to the third connecting portion is arranged in the first mounting cavity of the main body. The second connecting piece is inserted and fixed into the third connecting portion on the print head and the fourth connecting portion of the main body, so as to secure the print head in the first mounting cavity.

In some examples of the present application, the instant-imaging camera further includes a compartment door, a paper ejection roller, and a serrated blade. The compartment door includes opposing first and second sides. The first side of the compartment door is rotatably connected to the main body. The second side of the compartment door is snap-fitted to the print head, so that the compartment door can close the openings of the first mounting cavity and the second mounting cavity. The second side of the compartment door is spaced apart from the main body to form a paper outlet. The paper ejection roller is rotatably disposed on an inner wall of the second side of the compartment door and is located at an edge of the paper outlet. A first gear is arranged on the print head. A second gear matching the first gear is arranged on the paper ejection roller. The first gear on the print head meshes with the second gear on the paper ejection roller to drive the paper ejection roller to rotate, so that a printed photograph is sent out from the paper outlet. The serrated blade is disposed on the second side of the compartment door. The serrated blade is located at the edge of the paper outlet to be capable of cutting the printing paper.

In some examples of the present application, a pin for data transmission is arranged in the first mounting cavity of the main body. A socket for data transmission is arranged on the print head. The pin and the socket are capable of being plugged into and electrically connected to each other, so that when the print head is secured in the first mounting cavity, the print head is electrically connected to the main body.

In some examples of the present application, a mounting seat is arranged on the main body. A fifth connecting portion is arranged on the mounting seat. The instant-imaging camera further includes a lens, which includes a lens body and a sixth connecting portion arranged on the lens body. The lens body is accommodated in the mounting seat. The fifth connecting portion is capable of engaging with the sixth connecting portion, so that the lens is detachably connected to the main body.

In some examples of the present application, the mounting seat is a slot-shaped structure defined at a front end of the main body. The fifth connecting portion is an interlocking block structure disposed on a side wall of the mounting seat. A gap is defined between the fifth connecting portion and a bottom wall of the mounting seat to form a mounting clamping position. The lens body is accommodated in the mounting seat. A matching first conductive contact is arranged between the lens body and the mounting seat. The sixth connecting portion is an interlocking block structure disposed on a side portion of the lens body. The sixth connecting portion is snap-fitted into the mounting clamping position, so that the lens is detachably connected to the main body.

In some examples of the present application, a plurality of the fifth connecting portions are arranged on the side wall of the mounting seat at intervals along a circumferential direction thereof. The plurality of fifth connecting portions and the bottom wall of the mounting seat form a plurality of the mounting clamping positions. A plurality of the sixth connecting portions are arranged on a side portion of the lens body in one-to-one correspondence with the mounting clamping positions. The sixth connecting portion is screwed into its corresponding mounting clamping position from between two adjacent mounting clamping positions.

In some examples of the present application, the instant-imaging camera further includes an adapter. The adapter is accommodated in the mounting seat. The lens is disposed on the adapter. Two mutually conductive second conductive contacts are arranged on the adapter. The first conductive contact of the lens body matches one of the second conductive contacts on the adapter. The other second conductive contact on the adapter matches the first conductive contact on the mounting seat. A seventh connecting portion is arranged on a side portion of the adapter. The seventh connecting portion is capable of engaging with the fifth connecting portion, so that the adapter is detachably connected to the main body.

In some examples of the present application, the adapter is provided with an adapter slot for accommodating the lens. An eighth connecting portion is arranged in the adapter slot. The eighth connecting portion is an interlocking block structure disposed on a side wall of the adapter slot. A gap is defined between the eighth connecting portion and a bottom wall of the adapter slot to form an adapter clamping position. The sixth connecting portion is snap-fitted into the adapter clamping position, so that the lens and the adapter are detachably connected to each other.

In some examples of the present application, the instant-imaging camera further includes a battery. A battery mounting compartment is arranged in the main body. The battery is detachably accommodated in the battery mounting compartment. A fixing piece is arranged at one end of the battery. A clamping piece is arranged in the battery mounting compartment. The clamping piece is movable relative to the main body between an unlocking position and a locking position. The clamping piece is configured to, when in the locking position, clamp the fixing piece to lock the battery in the battery mounting compartment, and when in the unlocking position, disengage from the fixing piece to unlock the battery.

In some examples of the present application, the instant-imaging camera further includes a telescopic piece. The telescopic piece is disposed on an inner bottom of the battery mounting compartment. The telescopic piece is capable of extending and retracting along an axial direction of the battery. The clamping piece is connected to the telescopic piece so as to be movable between the unlocking position and the locking position.

In some examples of the present application, a guide channel is arranged in the inner bottom of the battery mounting compartment. The guide channel extends along the axial direction of the battery. The telescopic piece is slidably disposed in the guide channel. The clamping piece is an elastic arm structure connected to an outer end of the telescopic piece. When the clamping piece is in the locking position, the clamping piece is pressed by an inner edge of the guide channel to tightly abut against the fixing piece. When the clamping piece is in the unlocking position, the clamping piece expands open in a direction of getting away from the fixing piece to disengage from the fixing piece.

The present application further provides an instant-imaging system, including: the instant-imaging camera as described above; a printing paper disposed in the receiving chamber of the paper storage mechanism, the printing paper having a printing region and an identification code, the printing region configured to present content corresponding to the image information; a printing paper recognizer disposed on the second mounting cavity, the printing paper recognizer configured to read the identification code and obtain, based on the identification code, a printing parameter signal of the printing region in a current printing paper; and a processing module disposed in the main body and electrically connected to the printing paper recognizer to receive the printing parameter signal, the processing module configured to generate a printing control signal based on the printing parameter signal, so as to control, based on the printing control signal, the print head to print and present content corresponding to the image information into the printing region.

In some examples of the present application, the printing paper includes a surface layer and a backing paper adhered to each other, and the printing region is detachably disposed in the surface layer. One or more identification regions are arranged on the printing paper. The identification code is disposed in the identification region, and the identification region covers or partially covers the printing region. Alternatively, an identification region spaced apart from the printing region is arranged on the printing paper. The identification code is disposed in the identification region. At least two identification regions are arranged, and the at least two identification regions are located on opposite sides of the printing region.

In some examples of the present application, two or more identification codes are arranged in each of the identification regions.

The present application also provides a printing method for an instant-imaging system, implemented by the instant-imaging system as described above, including the following steps: obtaining, by a processing module, image information; recognizing, by a printing paper recognizer, an identification code on a printing paper to obtain a printing parameter signal, and transmitting the printing parameter signal to the processing module; after receiving the printing parameter signal, analyzing, by the processing module, the printing parameter signal to obtain a printing control signal; controlling, by the processing module, a print head to print and present, based on the printing control signal, content matching the image information in a printing region of the printing paper.

In some examples of the present application, the step of obtaining image information by the processing module includes:
capturing, by a lens, an optical image and transmitting the optical image to an optical imaging module; forming, by the optical imaging module, corresponding image information and transmitting the image information to the processing module; and/or importing, by an external terminal, image information into the processing module.

In some examples of the present application, the step of importing image information into the processing module by an external terminal includes: importing text information into the external terminal, and superimposing the text information onto original image information to form new image information.

In some examples of the present application, after the step of analyzing, by the processing module, the printing parameter signal to obtain the printing control signal, the method further includes: editing the image information based on the printing control signal, so that the image information adapts to a shape of the printing region.

In some examples of the present application, the method of editing the image information includes at least one of stretching the image information, compressing the image information, and cropping the image information.

In some examples of the present application, after the step of printing and presenting the preset image information in the printing region, the method further includes: separating the printing region from a body of the printing paper.

In some examples of the present application, the printing parameter signal includes a shape parameter signal and a position parameter signal of the printing region.

As can be seen from the above technical solutions, the beneficial effects of the present application are as follows:
The present application provides an instant-imaging camera, which includes a main body, one or more print heads, and a paper storage mechanism. The print head is detachably connected to the main body, so that the print head of the instant-imaging camera can be replaced. The paper storage mechanism has a receiving chamber that accommodates and limits printing papers of different sizes, so as to secure printing papers of different sizes in the paper storage mechanism. Therefore, a user can replace print heads and printing papers of different sizes or types according to their own needs, so as to print photographs of different sizes. This greatly expands the applicable scope of the camera, provides diverse usage methods, and improves the user experience.

### BRIEF DESCRIPTION OF DRAWINGS

FIG. 1 is a schematic perspective view of an instant-imaging camera according to Embodiment 1.
FIG. 2 is a schematic perspective view of the instant-imaging camera of FIG. 1 with a compartment door opened.
FIG. 3 is a schematic perspective view of the instant-imaging camera of FIG. 2 without printing paper installed.
FIG. 4 is a schematic view of a connection structure between a print head and a main body of the instant-imaging camera of FIG. 3.
FIG. 5 is a schematic perspective view of a second paper storage cassette of FIG. 3 installed on the main body.
FIG. 6 is an exploded schematic perspective view of the second paper storage cassette and the main body of FIG. 5.
FIG. 7 is an exploded schematic view of the instant-imaging camera without the second paper storage cassette installed. FIG. 8 is an exploded schematic view of the instant-imaging camera with the second paper storage cassette installed.
FIG. 9 is a schematic perspective view of an instant-imaging camera according to Embodiment 2 with a compartment door opened.
FIG. 10 is a schematic perspective view of the instant-imaging camera of FIG. 9 without printing paper installed.
FIG. 11 is a schematic perspective view of the instant-imaging camera of FIG. 9 without a blocking piece installed.
FIG. 12 is a schematic A-A cross-sectional view of the instant-imaging camera of FIG. 10 with an elastic piece in an extended state.
FIG. 13 is a schematic A-A cross-sectional view of the instant-imaging camera of FIG. 10 with the elastic piece in a compressed state.
FIG. 14 is a schematic B-B cross-sectional view of the instant-imaging camera of FIG. 10.
FIG. 15 is an exploded schematic view of the main body and a first size print head of the instant-imaging camera.
FIG. 16 is an exploded schematic view of the main body and a second size print head of the instant-imaging camera.
FIG. 17 is a first schematic view of an instant-imaging camera according to Embodiment 3.
FIG. 18 is a schematic view of the instant-imaging camera of FIG. 17 with a lens hidden.
FIG. 19 is a second schematic view of the instant-imaging camera.
FIG. 20 is a third schematic view of the instant-imaging camera.
FIG. 21 is a fourth schematic view of the instant-imaging camera.
FIG. 22 is an exploded view of the instant-imaging camera.
FIG. 23 is a schematic view of the instant-imaging camera with a clamping piece in an unlocking position.
FIG. 24 is a schematic view of the instant-imaging camera with the clamping piece in a locking position.
FIG. 25 is a schematic view of the instant-imaging camera with a battery being removed.
FIG. 26 is a fifth schematic view of the instant-imaging camera.
FIG. 27 is a schematic view of the battery in the instant-imaging camera.
FIG. 28 is a schematic view of an instant-imaging camera according to Embodiment 4 without printing paper installed.
FIG. 29 is a schematic view of an instant-imaging system.
FIG. 30 is a cross-sectional view of the instant-imaging camera of FIG. 28.
FIG. 31 is a schematic view of a printing region and an identification region on a printing paper.
FIG. 32 is a flow chart of a printing method of the instant-imaging system.

Description of reference numerals is as follows: 100: instant-imaging camera; 10: main body; 11: touch screen; 12: viewfinder; 13: flash; 131: external flash; 14: hot shoe; 15: battery; 151: fixing piece; 152: flange; 153: second conductive terminal; 154: battery mounting compartment; 155: clamping piece; 1551: hook portion; 1552: telescopic piece; 1553: sliding portion; 1554: elastic element; 1555: guide block; 1556: guide channel; 156: first conductive terminal; 157: main control circuit board; 158: charging port; 16: first mounting cavity; 161: fourth connecting portion; 162: pin; 17: second mounting cavity; 171: guide groove; 172: sensing contact; 18: mounting seat; 181: fifth connecting portion; 182: first conductive contact; 20: print head; 21: socket; 22: third connecting portion; 23: second gear; 24: second connecting piece; 30: paper storage mechanism; 31: first paper storage cassette; 311: mounting slot; 312: second connecting portion; 32: second paper storage cassette; 321: first connecting portion; 322: first connecting piece; 33: blocking piece; 331: plate body; 332: mounting post; 333: slider; 334: elastic piece; 34: receiving chamber; 40: compartment door; 41: door handle; 42: serrated blade; 43: paper outlet; 44: fixing block; 50: paper ejection roller; 51: first gear; 60: printing paper; 61: printing region; 62: identification region; 63: printing paper recognizer; 70: lens; 71: lens body; 711: sixth connecting portion; 80: adapter; 81: seventh connecting portion; 82: adapter slot; 83: eighth connecting portion; 84: second conductive contact.

### DETAILED DESCRIPTION OF EMBODIMENTS

Typical embodiments embodying the features and advantages of the present invention will be described in detail in the following description. It should be understood that the present invention is capable of various changes in different embodiments without departing from the scope thereof, and that the description and drawings are illustrative in nature and not intended to limit the present invention.

As used herein, it should be understood that directional or positional indications (such as up, down, left, right, front, and back) in the illustrated embodiments are provided only for ease of description and simplification, and do not indicate or imply that the devices or elements must have a specific orientation or be constructed and operated in a specific orientation. The descriptions are appropriate when the elements are positioned as shown in the figures. If the positions of these elements change, the directional indications also change accordingly.

Furthermore, the terms "first" and "second" are used only for descriptive purposes and should not be understood as indicating relative importance or implicitly specifying the number of technical features. Accordingly, features designated as "first" or "second" may explicitly or implicitly include one or more of the features. As used herein, the term "plurality" means two or more, unless otherwise explicitly specified.

### Embodiment 1

In view of the problem that current thermal printing paper comes in different specifications, while current instant-imaging cameras 100 can only be loaded with thermal printing paper of a single fixed specification, resulting in a narrow applicable scope and affecting the user experience to a certain extent.

The present embodiment provides an instant-imaging camera 100 that can securely install printing paper 60 of various sizes and types, allowing a user to print desired images according to their own needs.

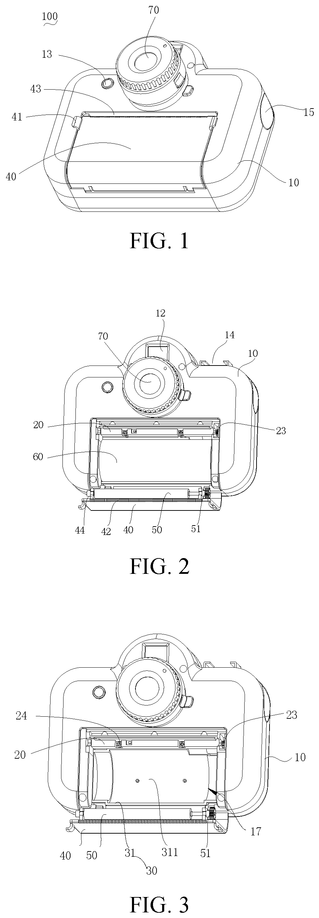

Referring to FIGS. 1 to 8, in the present embodiment, the instant-imaging camera 100 includes a main body 10, one or more print heads 20, and a paper storage mechanism 30. The paper storage mechanism 30 is disposed in the main body 10 and has a receiving chamber 34 that accommodates and limits printing paper 60 of different sizes, so as to secure printing paper 60 of different sizes in the paper storage mechanism 30.

The main body 10 is configured to capture images and generate an image signal. The main body 10 defines a first mounting cavity 16 and a second mounting cavity 17. Each print head 20 is detachably connectable in the first mounting cavity 16 and electrically connected to the main body 10, so that the print head 20 can receive the image signal transmitted from the main body 10 and print an image.

In the present embodiment, the paper storage mechanism 30 includes two or more paper storage cassettes. Each paper storage cassette is disposed in the second mounting cavity 17 of the main body 10, and each paper storage cassette has a receiving chamber 34 for accommodating printing paper 60. The receiving chambers 34 of different paper storage cassettes are capable of accommodating printing paper 60 of different sizes, so as to adapt to different print heads 20, thereby enabling the instant-imaging camera 100 to print different types of photographs.

The print head 20 is detachably connected to the main body 10, so that the print head 20 of the instant-imaging camera 100 can be replaced. A user can replace the print head 20 with different sizes or types according to their own needs. A plurality of paper storage cassettes are provided, allowing them to accommodate printing paper 60 of different sizes. This enables printing of color, black and white, or different sized photographs. This greatly expands the applicable scope of the camera, provides diverse usage methods, and improves the user experience.

It should be understood that the plurality of print heads 20 in the present embodiment may be printing devices of different sizes, and each print head 20 can correspondingly print images of a different size. The plurality of print heads 20 may also be printing devices that print in different colors. For example, some print heads 20 can print color images, while some print heads 20 can print black and white images. Of course, the plurality of print heads 20 may also be printing devices based on different imaging principles, such as some thermal print heads 20, ZINK (zero ink) print heads 20, and the like.

Correspondingly, the printing paper 60 in the present embodiment may also be printing paper 60 of different widths or different types of printing paper 60. They can be selected according to actual needs, such as ZINK (zero ink) printing paper 60, printing paper 60 with an adhesive backing, and the like. If a ZINK print head 20 and ZINK printing paper 60 are installed, they can be used to print color photographs. If printing paper 60 with an adhesive backing is installed, the printed photograph can be pasted, greatly enhancing the fun of use.

Referring to FIGS. 1 and 2, in some embodiments, the main body 10 includes a lens 70 and an optical imaging module. The lens 70 is configured to capture an optical image and transmit the optical image to the optical imaging module, and generate an image signal.

The optical imaging module includes a photosensitive device and a processing module. The photosensitive device may be a CMOS or CCD sensor, configured to capture light transmitted from the lens 70 and convert it into a digital image signal. The processing module is electrically connected to the photosensitive device, configured to process the digital image signal converted by the photosensitive device, and transmit the processed digital image signal to the print head 20 for printing.

Referring to FIG. 1, in some embodiments, a flash 13 is further arranged on a front end surface of the main body 10. The flash 13 can be used to provide fill light for an object to be photographed. A detachable battery 15 is further disposed in the main body 10. The battery 15 is electrically connected to the processing module to supply power to the entire device.

A hot shoe 14 is further arranged on a top of the main body 10, so that the instant-imaging camera 100 can quickly interface with photographic equipment such as a softbox, fill light, external flash 131, etc., so as to improve the imaging quality of the camera.

As shown in FIG. 2, the main body 10 is further provided with a viewfinder 12, which may be an optical viewfinder or an electronic viewfinder 12, for a user to compose and preview an image when taking a photograph. The optical viewfinder 12 can directly see an image passing through the lens 70 via a mirror or prism system; an electronic viewfinder 12 displays an image captured by a sensor through a display screen.

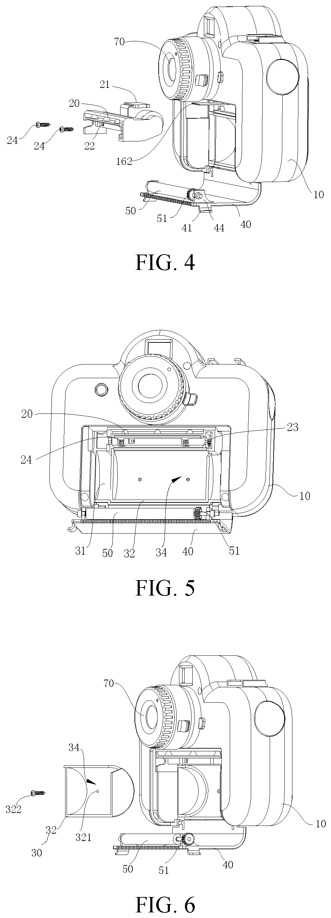

Referring to FIG. 4, in some embodiments, a pin 162 is arranged in the first mounting cavity 16 of the main body 10, and a socket 21 corresponding to the pin 162 is arranged on the print head 20.

The pin 162 and the socket 21 can be plugged into and electrically connected to each other, so that when the print head 20 is secured in the first mounting cavity 16, the print head 20 is electrically connected to the imaging module of the main body 10. By plugging the socket 21 on the main body 10 into the pin 162 on the print head 20, the connection efficiency when detaching or installing the print head 20 from the main body 10 is improved.

Referring to FIGS. 1 and 4, in some embodiments, the instant-imaging camera 100 further includes a compartment door 40.

The compartment door 40 includes a first side and a second side disposed opposite to each other. The first side of the compartment door 40 is rotatably connected to the main body 10, and the second side of the compartment door 40 is snap-fitted to the print head 20 in the first mounting cavity 16, so that the compartment door 40 closes the openings of the first mounting cavity 16 and the second mounting cavity 17. At this time, the second side of the compartment door 40 is spaced apart from the main body 10 to form a paper outlet 43 corresponding to the print head 20.

Specifically, an outer edge of the first side of the compartment door 40 is rotatably connected to a bottom of the second mounting cavity 17 of the main body 10 via a rotating shaft, so that the compartment door 40 can rotate about an extension line of its first side. When the compartment door 40 rotates to cover the openings of the first mounting cavity 16 and the second mounting cavity 17, the compartment door 40 is snap-fitted to the print head 20 on the main body 10 for fixation, or is magnetically fixed to the main body 10.

At this time, an edge of the second side of the compartment door 40 is spaced apart from the main body 10 to form a paper outlet 43. The paper outlet 43 is positioned directly opposite the print head 20, so that a photograph printed by the print head 20 can be sent out from the paper outlet 43.

As shown in FIG. 4, in some embodiments, a protruding door handle 41 is arranged on an outer wall of the second side of the compartment door 40. The door handle 41 allows a user to conveniently pull the compartment door 40, so that the compartment door 40 can be easily opened.

Referring to FIGS. 4 to 8, in some embodiments, the instant-imaging camera 100 further includes a paper ejection roller 50.

The paper ejection roller 50 is rotatably disposed on an inner wall of the second side of the compartment door 40 and is located at an edge of the paper outlet 43. A first gear 51 is arranged at one end of the paper ejection roller 50, and a second gear 23 matching the first gear 51 is arranged on the print head 20. The second gear 23 on the print head 20 can mesh with the first gear 51 on the paper ejection roller 50 to drive the paper ejection roller 50 to rotate, so that a printed photograph is sent out from the paper outlet 43.

Specifically, two protruding fixing blocks 44 are arranged on the inner wall of the second side of the compartment door 40, and the paper ejection roller 50 is rotatably connected to the two fixing blocks 44. The first gear 51 is fixed to one end of the paper ejection roller 50, and the second gear 23 is fixed to the print head 20 and corresponds to the first gear 51.

The second gear 23 is driven by a drive motor inside the print head 20. When the compartment door 40 closes the openings of the first mounting cavity 16 and the second mounting cavity 17, the paper ejection roller 50 is located between the print head 20 and the inner wall of the compartment door 40, and the first gear 51 on the paper ejection roller 50 meshes with the second gear 23 on the print head 20. After the printing paper 60 undergoes image printing by the print head 20, it is sent out via the paper ejection roller 50 and the paper outlet 43.

It should be understood that, as shown in the figures, the paper ejection roller 50 is provided with a plurality of spaced apart fixing positions along an axial direction. The fixing positions are used to fix the first gear 51, so that the position of the first gear 51 on the paper ejection roller 50 can be relatively adjusted to adapt to different sizes of the print head 20.

Referring to FIG. 2, in some embodiments, the instant-imaging camera 100 further includes a serrated blade 42. The serrated blade 42 is fixed to the second side of the compartment door 40, and the serrated blade 42 is located at the edge of the paper outlet 43 to be capable of cutting the printing paper 60.

Specifically, the serrated blade 42 has a plurality of triangular sawteeth arranged side by side. When the compartment door 40 is closed, the triangular sawteeth of the serrated blade 42 are located at a lower edge of the paper outlet 43. After the printed printing paper 60 is sent out from the paper outlet 43, a user can cut the printing paper 60 by pulling the printing paper 60 downward.

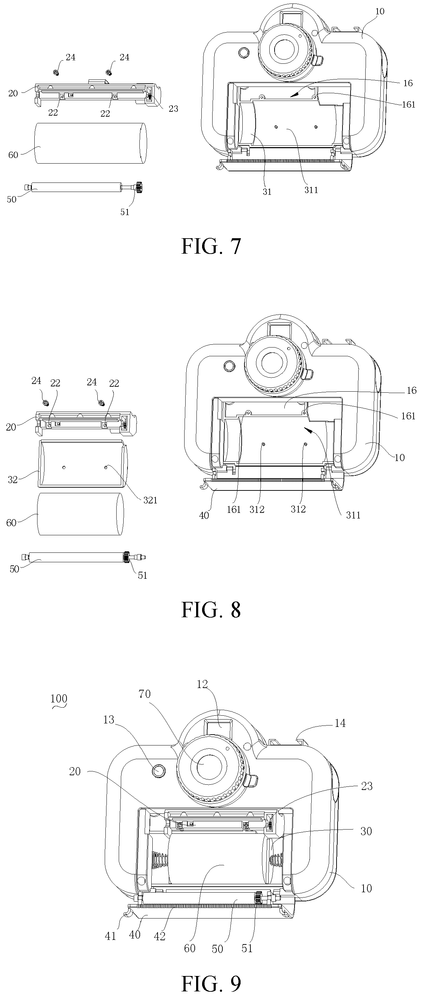

Referring to FIGS. 4 and 7, in some embodiments, a detachable connection mode between the print head 20 and the first mounting cavity 16 is further provided.

A third connecting portion 22 is arranged on the print head 20, and a fourth connecting portion 161 corresponding to the third connecting portion 22 is arranged in the first mounting cavity 16 of the main body 10. The third connecting portion 22 and the fourth connecting portion 161 are detachably connected, so that the print head 20 is detachably connected to the main body 10.

In some embodiments, a plurality of third connecting portions 22 are provided, and the third connecting portions 22 on each print head 20 have the same size. Furthermore, adjacent third connecting portions 22 on each print head 20 are equally spaced, so that print heads 20 of different sizes can all be secured in the first mounting cavity 16.

Further, the third connecting portion 22 is a hole-shaped structure formed in the print head 20, and the fourth connecting portion 161 is a hole-shaped structure formed in the first mounting cavity 16 of the main body 10. The instant-imaging camera 100 further includes a second connecting piece 24. The second connecting piece 24 is inserted and fixed into the third connecting portion 22 and the fourth connecting portion 161, so that the print head 20 is secured in the first mounting cavity 16.

By way of example, as shown in FIG. 4, the second connecting piece 24 is a screw, the third connecting portion 22 includes two spaced apart through holes, and the fourth connecting portion 161 includes two spaced apart threaded holes. The screw passes through the through hole in the print head 20 and then connects to the threaded hole in the main body 10 to secure the print head 20 to the main body 10. Fixing the print head 20 with a screw satisfies both the detachability of the print head 20 from the main body 10 and the connection stability of the print head 20.

It should be understood that the shape, size, and adjacent spacing distance of the third connecting portions 22 on print heads 20 of different sizes are the same, so that they can all be installed into the first mounting cavity 16.

It is conceivable that in some other embodiments, the third connecting portion 22 on the print head 20 and the fourth connecting portion 161 on the main body 10 may also be detachably connected by means such as snap-fitting, mortise and tenon joint, etc.

Referring to FIGS. 5, 7 and 8, in some embodiments, the paper storage cassette includes a first paper storage cassette 31 and a second paper storage cassette 32.

The first paper storage cassette 31 is disposed in the second mounting cavity 17 of the main body 10 and is configured to accommodate a first size of printing paper 60, so that it can match the print head 20 of the first size. The second paper storage cassette 32 is detachably connected to the main body 10, and the second paper storage cassette 32 is configured to accommodate a second size of printing paper 60, where the first size is larger than the second size.

When both the print head 20 and the printing paper 60 are selected to be the first size, this represents the maximum size of an image that the camera can print. At this time, the second paper storage cassette 32 does not need to be connected inside the main body 10. The printing paper 60 is placed directly in the first paper storage cassette 31, thereby securing the printing paper 60.

When it is needed to replace the printing paper 60 with the second size, the second paper storage cassette 32 can be fixed inside the first paper storage cassette 31 of the main body 10, and the printing paper 60 is accommodated and limited by the receiving chamber 34 in the second paper storage cassette 32.

It should be understood that the second size is not a fixed size. By detachably connecting the second paper storage cassette 32 to the main body 10, a user can replace the second paper storage cassette 32 with receiving chambers 34 of different sizes. This achieves compatibility with printing paper 60 of multiple sizes, making the instant-imaging camera 100 more versatile.

In the present embodiment, to improve the installation stability of the second paper storage cassette 32, a stepped mounting slot 311 is further defined in the first paper storage cassette 31 of the main body 10 to limit the position of the second paper storage cassette 32, thereby enhancing the installation stability of the second paper storage cassette 32.

Referring to FIGS. 6 and 8, in some embodiments, a detachable connection manner between the second paper storage cassette 32 and the main body 10 is further provided.

A first connecting portion 321 is arranged on the second paper storage cassette 32, and a second connecting portion 312 corresponding to the first connecting portion 321 is arranged in the main body 10. The first connecting portion 321 and the second connecting portion 312 are detachably connected, so that the second paper storage cassette 32 is detachably connected to the main body 10.

In some embodiments, a plurality of first connecting portions 321 are provided. The first connecting portions 321 on each second paper storage cassette 32 have the same size, and adjacent first connecting portions 321 on each second paper storage cassette 32 are equally spaced, so that second paper storage cassettes 32 of different sizes can all be connected to the main body 10.

Further, the first connecting portion 321 is a hole-shaped structure formed in the second paper storage cassette 32, and the second connecting portion 312 is a hole-shaped structure formed in the main body 10. The instant-imaging camera 100 further includes a first connecting piece 322. The first connecting piece 322 is inserted and fixed into the first connecting portion 321 and the second connecting portion 312, so that the second paper storage cassette 32 is secured in the mounting slot 311 of the main body 10.

By way of example, the first connecting piece 322 is also a screw, the first connecting portion 321 in the second paper storage cassette 32 includes two through holes, and the second connecting portion 312 in the mounting slot 311 of the main body 10 includes two threaded holes. The screw passes through the through hole in the second paper storage cassette 32 and then connects to the threaded hole to secure the second paper storage cassette 32 to the main body 10.

It is conceivable that the first connecting portion 321 on the second paper storage cassette 32 and the second connecting portion 312 on the main body 10 may also implement the detachable connection between the second paper storage cassette 32 and the main body 10 by means of snap fit, mortise and tenon joint, or interference fit.

In summary, the present application provides an instant-imaging camera 100, in which the print head 20 and the second paper storage cassette 32 are detachably connected to the main body 10, so that the print head 20 and the second paper storage cassette 32 of the instant-imaging camera 100 can be replaced. Therefore, a user can replace the print head 20 and the second paper storage cassette 32 with different sizes or types according to their own needs, so as to print color, black and white, or different sized photographs. This greatly expands the applicable scope of the camera, provides diverse usage methods, and improves the user experience.

### Embodiment 2

In view of the technical problem that current thermal printing paper comes in many different specifications, resulting in a narrow applicable scope and affecting the user experience to a certain extent. The present embodiment also provides an instant-imaging camera 100 that can fixedly install printing paper 60 of any size and type, allowing a user to print desired images according to their own needs.

In the present embodiment, the structure of the main body 10 and the connection structure of the print head 20 of the instant-imaging camera 100 are the same as those of the instant-imaging camera 100 in Embodiment 1. The main difference lies in the structure of the paper storage mechanism 30.

Referring to FIGS. 9 to 16, the paper storage mechanism 30 in the present embodiment includes a blocking piece 33 movably connected in the second mounting cavity 17. The blocking piece 33 is capable of moving along an axial direction of the second mounting cavity 17, so that the blocking piece 33 can abut against and secure end surfaces of printing paper 60 of different sizes, thereby securing printing paper 60 of different sizes in the second mounting cavity 17.

The print head 20 is detachably connected to the main body 10, so that the print head 20 of the instant-imaging camera 100 can be replaced. The blocking piece 33 can slide along the axial direction of the second mounting cavity 17 of the main body 10, so that the blocking piece 33 abuts against and secures end surfaces of printing paper 60 of any size, thereby securing printing paper 60 of different sizes in the second mounting cavity 17. Therefore, a user can replace the print head 20 and the printing paper 60 with different sizes or types according to their own needs, so as to print color, black and white, or different sized photographs. This greatly expands the applicable scope of the camera, provides diverse usage methods, and improves the user experience.

Referring to FIGS. 9 to 12, in some embodiments, two blocking pieces 33 are provided in the second mounting cavity 17. The two blocking pieces 33 are respectively disposed at two ends of the second mounting cavity 17 in the axial direction to abut against and secure two end surfaces of the printing paper 60.

It is conceivable that only one blocking piece 33 may be provided, or four, six, etc. may be provided, as long as the abutment and positioning of printing paper 60 of different sizes can be achieved.

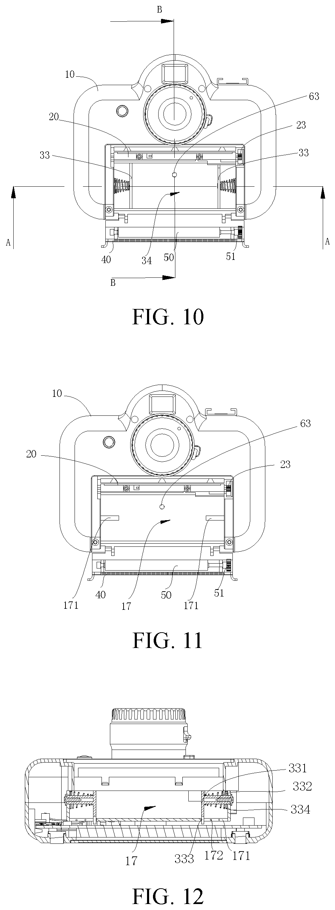

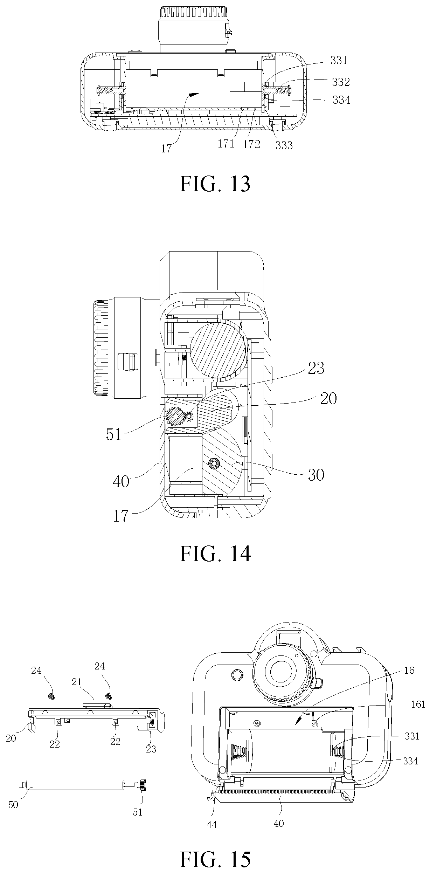

Referring to FIGS. 12 and 13, in some embodiments, the blocking piece 33 includes a plate body 331 and a mounting post 332 connected to the plate body 331. The mounting post 332 extends along the axial direction of the second mounting cavity 17.

Through holes matching the mounting post 332 are arranged in side walls at two ends of the second mounting cavity 17. The mounting post 332 is slidably connected in the through holes. The mounting post 332 is movable left and right along the axial direction of the through holes, so that the plate body 331 moves left and right in the axial direction of the second mounting cavity 17.

Referring to FIGS. 12 and 13, in some embodiments, the instant-imaging camera 100 further includes an elastic piece 334. The elastic piece 334 is sleeved on the mounting post 332 and abuts against the side wall of the second mounting cavity 17 and the plate body 331, respectively.

When the plate body 331 moves toward the side wall of the second mounting cavity 17, the elastic piece 334 is compressed. When the plate body 331 moves away from the side wall of the second mounting cavity 17, the elastic piece 334 recovers from elastic deformation and causes the plate body 331 to abut against the end surface of the printing paper 60.

Specifically, the elastic piece 334 in the present embodiment is a compression spring located between the plate body 331 and the side wall of the second mounting cavity 17, configured to provide a pressing force of the blocking piece 33, so that the blocking piece 33 can press against the two end surfaces of the printing paper 60 to secure printing paper 60 of different sizes.

Referring to FIGS. 11 to 13, in some embodiments, the blocking piece 33 further includes a slider 333. The slider 333 is disposed on a side of the plate body 331 facing a bottom wall of the second mounting cavity 17. A guide groove 171 matching the slider 333 is defined in the bottom wall of the second mounting cavity 17 of the main body 10. The slider 333 is slidably connected in the guide groove 171.

By inserting the slider 333 on the blocking piece 33 into the guide groove 171 on the main body 10, the left and right movement of the blocking piece 33 can be made more stable, effectively preventing the blocking piece 33 from jamming.

Referring to FIGS. 12 and 13, in some embodiments, a plurality of sensing contacts 172 are arranged in the guide groove 171. The sensing contacts 172 are configured to identify position information of the plate body 331.

By calculating the relative positions of the two plate bodies 331, the size of the printing paper 60 between the plate bodies 331 of the two blocking pieces 33 can be obtained, and this size can be displayed on the main body 10. A user can then select a print head 20 of a corresponding size based on this size to assemble with the main body 10, so as to achieve compatibility between the printing paper 60 and the print head 20.

In summary, the present embodiment provides an instant-imaging camera 100, which includes a main body 10, a plurality of replaceable print heads 20, and a blocking piece 33 slidably connected in the main body 10. The print head 20 is detachably connected to the main body 10, so that the print head 20 of the instant-imaging camera 100 can be replaced. The blocking piece 33 can slide along the axial direction of the second mounting cavity 17 of the main body 10, so that the blocking piece 33 abuts against and secures end surfaces of printing paper 60 of different sizes, thereby securing printing paper 60 of different sizes in the second mounting cavity 17. Therefore, a user can replace the print head 20 and the printing paper 60 with different sizes or types according to their own needs, so as to print color, black and white, or different sized photographs. This greatly expands the applicable scope of the camera, provides diverse usage methods, and improves the user experience.

### Embodiment 3

In view of the technical problem that in current instant-imaging cameras using thermal printing technology, the lens types are limited, resulting in a limited applicable scope for photography and failing to meet different shooting needs of users, which affects the user experience to a certain extent.

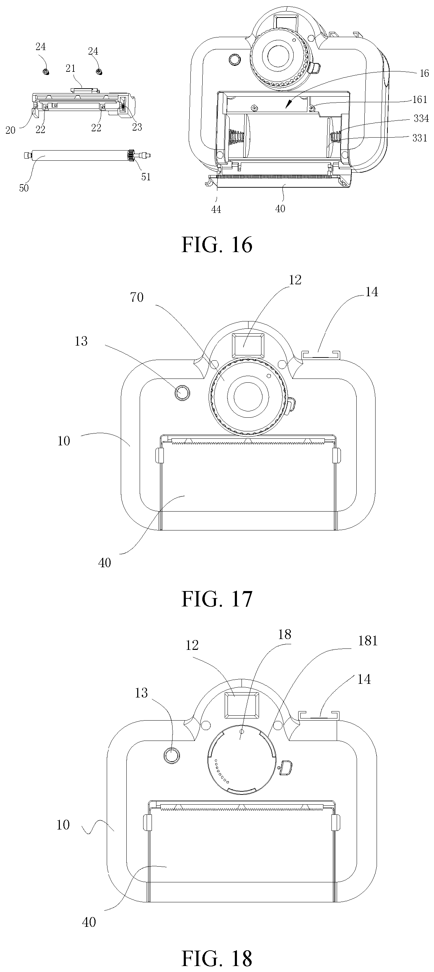

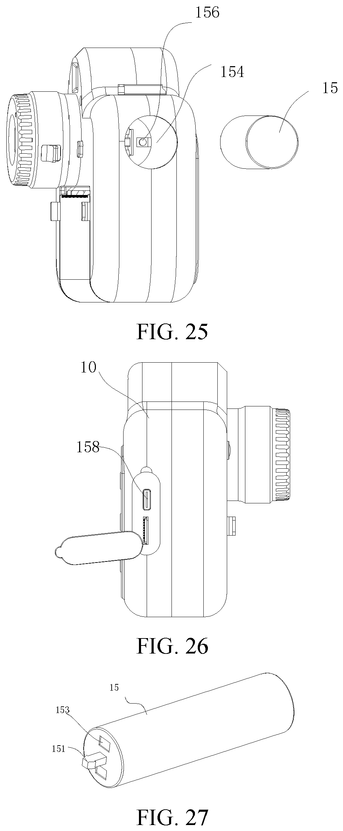

Referring to FIGS. 17 to 27, the present embodiment provides an instant-imaging camera 100, in which the lens 70 and the main body 10 are detachably connected, so that a user can replace different lenses 70.

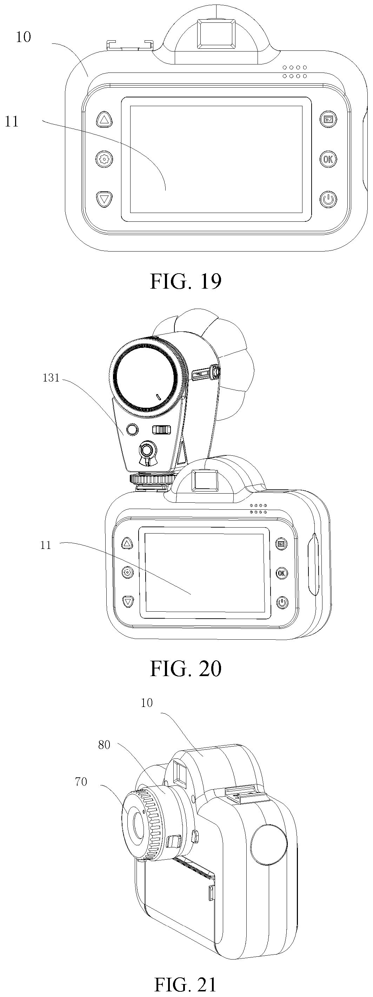

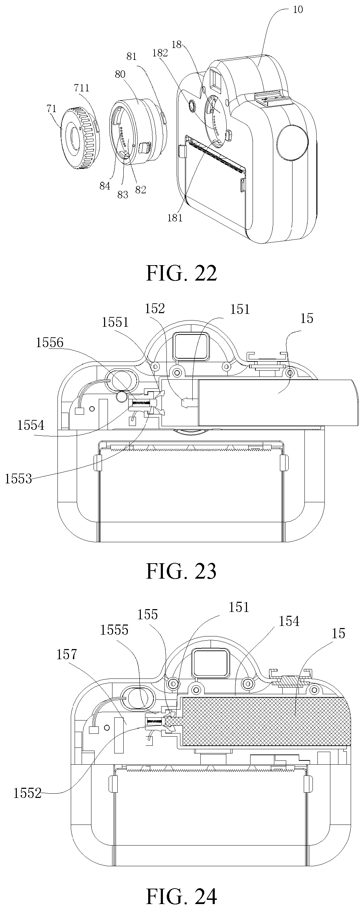

Referring to FIGS. 21 and 22, the lens 70 is disposed on the main body 10. The lens 70 may be a fixed focal length lens or a zoom lens 70. The lens 70 includes a lens body 71 and a sixth connecting portion 711 disposed on the lens body 71. The lens body 71 is the main body of the lens 70 and may be a cylindrical structure with an optical module accommodated therein for receiving light.

The main body 10 is provided with an imaging device and a processing module therein. The imaging device may be a CMOS or CCD sensor. Light passing through the lens body 71 is transmitted to the imaging device to form an image signal. The processing module is electrically connected to the imaging device and is configured to process the image signal formed by the imaging device and transmit the processed image signal to the print head 20. The print head 20 can receive the image signal to print and present the corresponding content onto the thermal printing paper 60, finally forming a photograph.

Referring to FIGS. 19 and 20, in some embodiments, a touch screen 11 is further disposed on the main body 10. The touch screen 11 is located on side facing away from the lens 70, for a user to view, edit, and print captured photographs.

Referring to FIGS. 18 and 22, in some embodiments, a mounting seat 18 and a fifth connecting portion 181 are arranged on the main body 10. The fifth connecting portion 181 is arranged corresponding to the mounting seat 18. The mounting seat 18 is used for installing the lens 70.

In some embodiments, the lens body 71 is accommodated in the mounting seat 18, and the sixth connecting portion 711 on the lens body 71 engages with the fifth connecting portion 181, so that the lens 70 is detachably connected to the main body 10. Thus, a suitable lens 70 can be replaced according to the needs of a user to expand its applicable scope, greatly improving the user experience.

In some embodiments, the mounting seat 18 is a slot-shaped structure defined at a front end of the main body 10. The fifth connecting portion 181 is an interlocking block structure disposed on a side wall of the mounting seat 18. A gap is provided between the fifth connecting portion 181 and a bottom wall of the mounting seat 18 to form a mounting clamping position. Correspondingly, the sixth connecting portion 711 is an interlocking block structure disposed on a side portion of the lens body 71. The sixth connecting portion 711 is snap-fitted into the mounting clamping position, so that the lens 70 is detachably connected to the main body 10. The snap-fit connection between the interlocking block structure and the mounting clamping position facilitates the installation and removal of the lens 70 and the main body 10, thereby allowing a suitable lens 70 to be replaced.

It should be understood that the gap formed by the mounting clamping position can exactly correspond to the size of the sixth connecting portion 711, so that when the sixth connecting portion 711 is snap-fitted into the mounting clamping position, wobbling can be avoided and the lens 70 can be installed more securely. During installation, the sixth connecting portion 711 may be first offset from the fifth connecting portion 181, and then the lens 70 is rotated so that the sixth connecting portion 711 is screwed into the mounting clamping position. During removal, the sixth connecting portion 711 may be first screwed out of the mounting clamping position, and then the lens 70 is taken out.

In some embodiments, the fifth connecting portion 181 may alternatively be an internal thread disposed on the side wall of the mounting seat 18, and the sixth connecting portion 711 may be an external thread disposed on the side portion of the lens body 71, so that the fifth connecting portion 181 and the sixth connecting portion 711 are threadedly connected for installation.

In some embodiments, the fifth connecting portion 181 may alternatively be a screw hole disposed on the bottom wall of the mounting seat 18, and the sixth connecting portion 711 may be a screw disposed on the lens body 71. The screw is connected into the screw hole to engage the fifth connecting portion 181 and the sixth connecting portion 711.

Referring to FIG. 22, in some embodiments, a matching first conductive contact 182 is arranged between the lens body 71 and the mounting seat 18. Through the first conductive contact 182, the lens body 71 and the main body 10 are electrically connected, thereby enabling functions such as automatic focus of the lens body 71 controlled by the processing module. A plurality of first conductive contacts 182 may be provided. The first conductive contact 182 on the mounting seat 18 may be disposed on the bottom wall of the mounting seat 18. The first conductive contact 182 on the lens body 71 may be disposed on an end surface of the lens body 71 that is accommodated in the mounting seat 18. After the lens body 71 is installed into the mounting seat 18, the two first conductive contacts 182 abut and conduct with each other.

In some embodiments, a plurality of fifth connecting portions 181 are arranged on the side wall of the mounting seat 18 at intervals along a circumferential direction thereof. The plurality of fifth connecting portions 181 and the bottom wall of the mounting seat 18 form a plurality of mounting clamping positions. Two, three or more fifth connecting portions 181 may be provided. In the present embodiment, three fifth connecting portions 181 are provided, and the three fifth connecting portions 181 are evenly spaced apart.

In some embodiments, a plurality of sixth connecting portions 711 are arranged on a side portion of the lens body 71 in one-to-one correspondence with the mounting clamping positions. Each sixth connecting portion 711 is snap-fitted into a corresponding mounting clamping position, thereby making the connection between the lens 70 and the main body 10 more secure. In the present embodiment, three sixth connecting portions 711 are provided corresponding to the three fifth connecting portions 181, and the three sixth connecting portions 711 are evenly spaced apart along the side portion of the lens body 71.

In some embodiments, when installing the lens 70, the sixth connecting portion 711 may be first aligned with a region between two adjacent mounting clamping positions, and then the sixth connecting portion 711 is screwed into its corresponding mounting clamping position from between the adjacent mounting clamping positions. Correspondingly, during removal, the sixth connecting portion 711 may be screwed out of the mounting clamping position, and then the lens 70 is taken out.

Referring to FIGS. 21 and 22, in some embodiments, the instant-imaging camera 100 further includes an adapter 80. For some lenses 70 that do not match the mounting clamping positions on the main body 10, they can be installed on the main body 10 via the adapter 80, further improving the applicability of the lens 70.

In some embodiments, the lens 70 is disposed on the adapter 80, and the adapter 80 is accommodated in the mounting seat 18. A seventh connecting portion 81 is arranged on a side portion of the adapter 80. The seventh connecting portion 81 can engage with the fifth connecting portion 181, so that the adapter 80 is detachably connected to the main body 10. Thus, the lens 70 can be connected to the main body 10 by disposing the lens 70 on the adapter 80.

In some embodiments, two mutually conductive second conductive contacts 84 are arranged on the adapter 80. The first conductive contact 182 of the lens body 71 matches one of the second conductive contacts 84 on the adapter 80. The other second conductive contact 84 on the adapter 80 matches the first conductive contact 182 on the mounting seat 18. Thus, when the lens 70 is installed via the adapter 80, the first conductive contact 182 on the lens 70 can conduct with the first conductive contact 182 on the mounting seat 18 through the second conductive contacts 84 on the adapter 80, achieving electrical connection between the lens 70 and the main body 10.

In some embodiments, the seventh connecting portion 81 may be an interlocking block structure disposed on a side portion of the adapter 80. The seventh connecting portion 81 is snap-fitted into the mounting clamping position to be detachably connected to the main body 10.

The adapter 80 may be a cylindrical structure. The adapter 80 is provided with an adapter slot 82 for accommodating the lens 70. An eighth connecting portion 83 is arranged in the adapter slot 82. The eighth connecting portion 83 may be an interlocking block structure disposed on a side wall of the adapter slot 82. A gap is provided between the eighth connecting portion 83 and a bottom wall of the adapter slot 82 to form an adapter clamping position. The sixth connecting portion 711 of the lens 70 is snap-fitted into the adapter clamping position, so that the lens 70 and the adapter 80 are detachably connected. Thus, for lenses 70 of other brands, a corresponding adapter clamping position can be designed according to the sixth connecting portion 711 of that lens 70 to install the lens 70 onto the adapter 80. The adapter 80 is then snap-fitted via the seventh connecting portion 81 to the mounting clamping position on the main body 10, finally connecting the lens 70 to the main body 10.

It should be understood that because the structures of the sixth connecting portions 711 of lenses 70 from different brands are different, they cannot be directly installed onto the fifth connecting portions 181 on the main body 10. Therefore, in order to achieve compatibility with lenses 70 of different brands, the adapter 80 needs to be provided. The eighth connecting portion 83 of the adapter 80 is compatible with the sixth connecting portion 711 on the lens 70, while the seventh connecting portion 81 is compatible with the fifth connecting portion 181 on the main body 10. Thus, lenses 70 of other brands can be installed onto the main body 10.

The two second conductive contacts 84 on the adapter 80 may be respectively disposed on the bottom wall of the adapter slot 82 and on an end surface of the adapter 80 that is accommodated in the mounting seat 18, so that the two second conductive contacts 84 can respectively match the first conductive contact 182 on the lens body 71 and the first conductive contact 182 on the mounting seat 18.

In some embodiments, the seventh connecting portion 81 may have the same structure as the sixth connecting portion 711. A plurality of seventh connecting portions 81 may be provided, corresponding one-to-one with the fifth connecting portions 181, to improve the connection stability between the adapter 80 and the main body 10.

In some embodiments, a plurality of eighth connecting portions 83 may be provided. The plurality of eighth connecting portions 83 form a plurality of adapter clamping positions to make the connection between the lens 70 and the adapter 80 more stable.

Referring to FIGS. 23 to 27, the present embodiment provides an instant-imaging camera 100 that can achieve detachable connection between the battery 15 and the main body 10, so that the battery 15 can be replaced according to user needs, increasing the battery life of the instant-imaging camera 100.

In some embodiments, the instant-imaging camera 100 includes a battery 15. The battery 15 is used to supply power to the main body 10 and the lens 70. The battery 15 may be a lithium battery, an alkaline battery, or the like. The battery 15 may have a plate-like or cylindrical structure as a whole.

In some embodiments, a battery mounting compartment 154 is arranged in the main body 10. The battery mounting compartment 154 has an installation space therein. The battery 15 is detachably accommodated in the battery mounting compartment 154. The battery mounting compartment 154 may be open at one end, so as to communicate with the outside, facilitating the installation and removal of the battery 15. The open end of the battery mounting compartment 154 may be disposed on a side portion of the main body 10. The battery 15 is inserted into the battery mounting compartment 154 from the side portion of the main body 10. When the battery 15 is installed in place in the battery mounting compartment 154, an outer end of the battery 15 may be flush with an outer wall of the main body 10, thereby improving the aesthetic appearance of the main body 10.

Referring to FIG. 24, in some embodiments, a fixing piece 151 is arranged at one end of the battery 15. A clamping piece 155 is arranged in the battery mounting compartment 154. The clamping piece 155 is movable relative to the main body 10 between an unlocking position and a locking position. The clamping piece 155 is configured to, when in the locking position, clamp the fixing piece 151 to lock the battery 15 in the battery mounting compartment 154, and when in the unlocking position, disengage from the fixing piece 151 to unlock the battery 15.

It should be understood that by providing the clamping piece 155 and moving the clamping piece 155 between the unlocking position and the locking position corresponding to the disengagement and locking of the battery 15, the clamping piece 155 can be used to lock the battery 15 and secure it in the battery mounting compartment 154 when installing the battery 15. When the battery 15 needs to be removed, the clamping piece 155 disengages from the battery 15, facilitating its removal from the main body 10. Thus, the battery 15 can be replaced according to user needs, increasing the battery life of the instant-imaging camera 100.

In some embodiments, the inner contour of the battery mounting compartment 154 and the outer contour of the battery 15 may match each other, so that the battery 15 can be installed more stably when inserted into the battery mounting compartment 154. The unlocking position and the locking position of the clamping piece 155 are located at different positions on the axis of the battery 15. The unlocking position is closer to the open end of the battery mounting compartment 154 than the locking position.

In some embodiments, the instant-imaging camera 100 further includes a telescopic piece 1552. The telescopic piece 1552 is disposed on an inner bottom of the battery mounting compartment 154, opposite to the end of the battery 15 having the fixing piece 151. The clamping piece 155 is connected to the telescopic piece 1552. The telescopic piece 1552 is capable of extending and retracting along the axial direction of the battery 15, thereby being able to drive the clamping piece 155 to move between the unlocking position and the locking position.

In some embodiments, a guide channel 1556 is arranged in the inner bottom of the battery mounting compartment 154. The guide channel 1556 extends along the axial direction of the battery 15. The telescopic piece 1552 is slidably disposed in the guide channel 1556, thereby being able to extend and retract along the guide channel 1556 in the axial direction of the battery 15. The guide channel 1556 provides guiding and limiting functions for the movement of the telescopic piece 1552.

In some embodiments, the clamping piece 155 is an elastic arm structure connected to an outer end of the telescopic piece 1552, so that the clamping piece 155 has a certain elasticity and can deform. When the clamping piece 155 is in the locking position, the clamping piece 155 is partially located in the guide channel 1556, and the clamping piece 155 is pressed by an inner edge of the guide channel 1556 to tightly abut against the fixing piece 151, thereby clamping the fixing piece 151 in the battery mounting compartment 154. When the clamping piece 155 is in the unlocking position, the clamping piece 155 is located outside the guide channel 1556, and due to its own elasticity, the clamping piece 155 expands open in a direction away from the fixing piece 151 to disengage from the fixing piece 151.

Referring to FIG. 23, in some embodiments, the fixing piece 151 protrudes from an end surface of one end of the battery 15, forming a rod-like structure or a block-like structure to facilitate clamping by the clamping piece 155. A flange 152 is formed at an end of the fixing piece 151 facing away from the battery 15. The flange 152 protrudes from the body of the fixing piece 151 in a radial direction of the battery 15. A hook portion 1551 is formed at an end of the clamping piece 155 facing away from the telescopic piece 1552. When the clamping piece 155 is in the locking position, the hook portion 1551 of the clamping piece 155 hooks onto the flange 152, thereby locking the fixing piece 151 and preventing the battery 15 from coming out of the open end of the battery mounting compartment 154.

In some embodiments, the telescopic piece 1552 includes a sliding portion 1553 and an elastic element 1554. The sliding portion 1553 is disposed in the guide channel 1556 and is movable along the guide channel 1556. The elastic element 1554 is disposed in the guide channel 1556. Two ends of the elastic element 1554 are respectively connected to the bottom wall of the guide channel 1556 and the sliding portion 1553. When the clamping piece 155 moves to the locking position, the elastic element 1554 is in a compressed state. When the clamping piece 155 moves from the locking position to the unlocking position, the energy accumulated in the elastic element 1554 can cause the sliding portion 1553 to move outward, thereby driving the clamping piece 155 to move outward, so that the clamping piece 155 disengages from the fixing piece 151 of the battery 15 when moving to the unlocking position.

As shown in FIG. 23, in some embodiments, when the clamping piece 155 is in the locking position, there is still a certain gap between the battery 15 and the inner bottom of the battery mounting compartment 154. Thus, when a user needs to remove the battery 15, the user can press the outer end of the battery 15. After the battery 15 moves a certain distance into the battery mounting compartment 154, the user releases it. The clamping piece 155 and the battery 15 rebound outward under the action of the elastic element 1554. The clamping piece 155, when moving to the unlocking position, just disengages from the guide channel 1556, thereby being able to expand open in a direction away from the fixing piece 151, causing the clamping piece 155 to disengage from the fixing piece 151. The elastic element 1554 may be a compression spring or a disc spring, which extends and retracts within the guide channel 1556.

In some embodiments, an accommodating groove is provided in the inner bottom surface of the battery mounting compartment 154. A guide block 1555 is provided in the accommodating groove. The guide channel 1556 is defined in the guide block 1555. When the clamping piece 155 is in the locking position, the fixing piece 151 extends into the accommodating groove, so that the gap between the battery 15 and the inner bottom of the battery mounting compartment 154 is relatively small, which can improve the space utilization of the battery mounting compartment 154 and make the installation of the battery 15 more compact. When the clamping piece 155 is in the unlocking position, the clamping piece 155 expands open in the direction away from the fixing piece 151 and folds into the accommodating groove.

In some embodiments, two clamping pieces 155 are provided. The two clamping pieces 155 are connected to opposite sides of the outer end of the telescopic piece 1552. Correspondingly, the flange 152 is annularly disposed at the end of the fixing piece 151 away from the battery 15. Thus, when the clamping piece 155 is in the locking position, the hook portions 1551 of the two clamping pieces 155 together hook onto the flange 152, making the clamping piece 155 clamp the fixing piece 151 more securely. When the clamping piece 155 is in the unlocking position, the two clamping pieces 155 expand open in opposite directions to disengage from the flange 152, so that the battery 15 disengages from the clamping piece 155 and the battery 15 can be removed.

In some embodiments, an outer wall surface of the flange 152 is a conical surface. A small-diameter end of the conical surface is located at the end of the flange 152 away from the battery 15, so that the outer wall surface of the flange 152 has a guiding function, facilitating the hook portion 1551 of the clamping piece 155 to gradually abut against the outer wall surface of the flange 152 and hook onto a large-diameter end of the flange 152 when the clamping piece 155 is in the locking position.

In some embodiments, more clamping pieces 155 may be provided, such as three or four, arranged along the circumferential direction of the telescopic piece 1552, to improve the stability of the battery 15 when locked.

Referring to FIGS. 24 to 27, in some embodiments, a main control circuit board 157 is provided in the main body 10 for disposing a main control module of the instant-imaging camera 100. A first conductive terminal 156 electrically connected to the main control circuit board 157 is disposed on the inner bottom surface of the battery mounting compartment 154. A second conductive terminal 153 corresponding to the first conductive terminal 156 is disposed at an end of the battery 15 that extends into the battery mounting compartment 154. When the battery 15 is in the locking position, the first conductive terminal 156 and the second conductive terminal 153 are connected, so that the battery 15 can supply power to the main control circuit board 157. It should be understood that two first conductive terminals 156 are provided, corresponding to the positive electrode and the negative electrode of the battery 15, respectively.

In some embodiments, a charging port 158 is further disposed on a side portion of the main body 10. The charging port 158 is electrically connected to the battery 15, so that the battery 15 located in the battery mounting compartment 154 can be charged via the charging port 158.

In summary, in the present embodiment, by providing the mounting seat 18 on the main body 10, the lens body 71 can be accommodated in the mounting seat 18, and by providing the fifth connecting portion 181 on the main body 10 and correspondingly providing the sixth connecting portion 711 on the lens body 71, during installation and removal, the fifth connecting portion 181 and the sixth connecting portion 711 engage to achieve detachable connection between the lens 70 and the main body 10. Thus, a suitable lens 70 can be replaced according to user needs to expand its applicable scope, greatly improving the user experience. Furthermore, the adapter 80 is provided so that the lens 70 can be detachably installed on the adapter 80, and the adapter 80 can be detachably installed on the mounting seat 18. For some lenses 70 that do not match the mounting clamping positions on the main body 10, they can be installed on the main body 10 via the adapter 80, further improving the applicability of the lens 70.

In the present embodiment, by providing the battery mounting compartment 154 on the main body 10, the battery 15 is installed in the battery mounting compartment 154, and by switching the clamping piece 155 between the locking position and the unlocking position to clamp and release the battery 15, the battery 15 is detachably installed in the main body 10. Thus, the battery 15 can be replaced according to user needs, increasing the battery life of the instant-imaging camera 100.

### Embodiment 4

In view of the technical problem that current instant-imaging cameras can usually only be loaded with printing paper of a fixed specification, and if encountering printing paper with an irregular printing region, they cannot accurately print within the printing region, resulting in inability to use normally, thus having a small applicable scope and affecting the user experience to a certain extent.

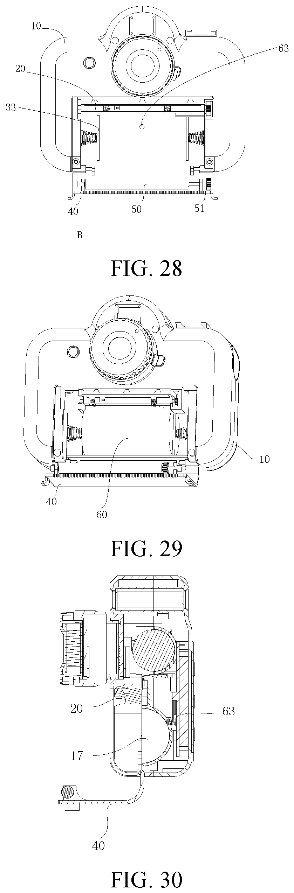

Referring to FIGS. 28 to 31, the present embodiment provides an instant-imaging system, which can improve the applicable scope of irregular printing paper 60 and enhance the user experience. The instant-imaging system includes the above-mentioned instant-imaging camera 100. The main body 10, the print head 20, and the paper storage mechanism 30 of the instant-imaging camera 100 are substantially the same as those in Embodiment 2. In the present embodiment, the instant-imaging camera 100 is provided with a printing paper recognizer 63, a printing paper 60, and a processing module.

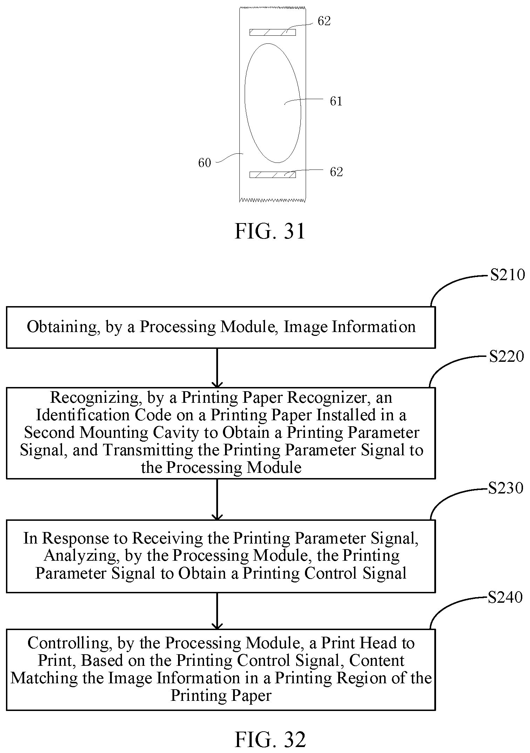

Referring to FIG. 31, in some embodiments, the printing paper 60 has a printing region 61 and an identification code. The printing region 61 is configured to present content corresponding to image information, and finally forms a photograph under printing by the print head 20. The shape of the printing region 61 may be regular, such as rectangular, circular, or triangular, or may be irregular, so that the final photograph can have different shape styles and can be used as a photo sticker or a refrigerator sticker, satisfying the personalized needs of users.

In some embodiments, a printing paper recognizer 63 is arranged in the second mounting cavity 17, configured to read the identification code and obtain, based on the identification code, a printing parameter signal of the printing region 61 in a current printing paper 60. The printing paper recognizer 63 may be a scanning device that obtains the printing parameter signal by scanning the identification code, or may be an image analysis device that obtains the printing parameter signal by analyzing the identification code through image analysis.

The printing parameter signal includes a shape parameter signal and a position parameter signal of the printing region 61. The specific shape of the printing region 61 can be obtained through the shape parameter signal, and position information of the printing region 61 on the printing paper 60 can be obtained through the position parameter signal, thereby locating the position and shape of the printing region 61 on the printing paper 60.

Further, a processing module is electrically connected to the printing paper recognizer 63 to receive the printing parameter signal, and generates a printing control signal based on the printing parameter signal, so as to control, based on the printing control signal, the print head 20 to print and present content corresponding to the image information into the printing region 61, preventing the image information from being incorrectly printed outside the printing region 61 and causing loss of printed content, thereby improving the applicable scope of irregular printing paper 60 and greatly enhancing the user experience.

In some embodiments, the printing paper 60 has one or more identification regions 62. The identification regions 62 have the above-mentioned identification code, and the identification regions 62 cover or partially cover the printing region 61. The identification code may cover or partially cover the printing region 61. In this case, the identification code may be an invisible QR code. The invisible QR code is disposed in the printing region 61 using colorless invisible materials such as fluorescent ink, fluorescent toner, fluorescent ribbon, infrared ink, etc., and is invisible to the naked eye under normal conditions, and can only be scanned and read by a specialized printing paper recognizer 63.

In some embodiments, the identification code may be arranged on the printing paper 60 in an area outside the printing region 61. In this case, the identification code may be either an invisible QR code or a visible code, such as a QR code or a barcode visible to the naked eye.

Referring to FIG. 31, in the present embodiment, the printing paper 60 has an identification region 62 spaced apart from the printing region 61, and the identification code is disposed in the identification region 62. By providing the identification region 62, the arrangement of the identification code can be standardized. At least two identification regions 62 may be provided, and the at least two identification regions 62 are located on opposite sides of the printing region 61, thereby improving the recognition efficiency of the printing paper recognizer 63 and ensuring that the identification code can be recognized when the printing paper 60 is in operation. In the present embodiment, two identification regions 62 are provided, respectively located on two sides of the printing region 61 in a moving direction thereof.

In some embodiments, each identification region 62 has two or more identification codes. Each identification code in the identification region 62 has the same content, and they are arranged in the identification region 62 to facilitate reading by the printing paper recognizer 63 and to prevent recognition failure caused by the placement position of the printing paper recognizer 63. The number of identification codes may be two, three, four, etc., and the specific number depends on the actual situation.

Referring to FIGS. 28 and 30, in some embodiments, a mounting groove is defined in the bottom wall of the second mounting cavity 17. The printing paper recognizer 63 is disposed in the mounting groove. A recognition end of the printing paper recognizer 63 faces towards a side of the printing paper 60 on which the identification region 62 is disposed, i.e., the front side of the printing paper 60, so that the printing paper recognizer 63 can recognize the printing parameter signal when the printing paper 60 is in operation.

The mounting groove may be disposed in a central region of the bottom wall of the second mounting cavity 17, so that the recognition end and the identification region 62 can be better aligned, thereby improving the probability of accurately recognizing the identification code and generating the printing parameter signal.

In some embodiments, the printing paper 60 includes a body, and the printing region 61 is adhered to the body, so that after printing is completed and a photograph is formed, the printing region 61 can be removed from the body of the printing paper 60 and adhered to a place where adhesion is desired, such as on a refrigerator to form a refrigerator sticker. An adhesive backing is disposed on a back side of the printing region 61, so that the printing region 61 is adhered to the body.

Referring to FIG. 32, the present embodiment further provides a printing method for an instant-imaging system, implemented by the above-mentioned instant-imaging camera 100. The printing method for the instant-imaging system includes the following steps:
S210: obtaining, by a processing module, image information.
S220: recognizing, by the printing paper recognizer 63, an identification code of the printing paper 60 installed in the second mounting cavity 17 to obtain a printing parameter signal, and transmitting the printing parameter signal to the processing module.

Based on the above, the printing paper recognizer 63 recognizes the identification code on the printing paper 60, thereby extracting shape parameter information and position parameter information of the printing region 61, and transmits the printing parameter signal to the processing module, facilitating subsequent analysis of the printing parameter signal by the processing module to obtain position parameters and shape parameters of the printing region 61.

S230: after receiving the printing parameter signal, analyzing, by the processing module, the printing parameter signal to obtain a printing control signal.

Based on the above, the processing module analyzes the printing parameter signal to obtain shape parameters and position parameters of the printing region 61, and after the analysis is completed, generates a printing control signal, so that the printing range of the print head 20 can be controlled by the printing control signal, allowing the image to be printed into the printing region 61 without being printed outside the printing region 61.

S240: controlling, by the processing module, the print head 20 to print, based on the printing control signal, content matching the image information in the printing region 61 of the printing paper 60.

Based on the above, the printing paper recognizer 63 recognizes the printing parameter signal of the identification code of the printing paper 60, thereby obtaining the printing parameters of the printing region 61, and controls the print head 20 to print according to the printing control signal, so that the content corresponding to the preset image information is limited to be presented within the printing region 61 and will not be printed outside the printing region 61 by the print head 20, thereby improving the applicable scope of irregular printing regions 61 and greatly enhancing the user experience.

In the present embodiment, the paper ejection roller 50 can drive the printing paper 60 to operate, so that the printing paper 60 moves. When the printing paper 60 is in a roll, the roll of printing paper 60 is driven to rotate, causing the printing paper 60 to move and pass by the printing paper recognizer 63, facilitating the printing paper recognizer 63 to recognize the identification code on each printing paper 60.

For the instant-imaging camera 100 having only one sheet of printing paper 60, when the printing paper 60 is in operation, the printing paper 60 moves toward the print head 20. In an initial state, the printing paper recognizer can be aligned with the printing region 61 to recognize the identification code on the identification region 62 of the printing paper 60.

In the present embodiment, the step of obtaining image information by the processing module includes: obtaining, by the main body 10, image information and transmitting the image information to the processing module, and/or importing, by an external terminal, image information into the processing module.

Specifically, an optical image is captured by the lens 70 and transmitted to an optical imaging module. The optical imaging module forms corresponding image information and transmits the image information to the processing module.

In some embodiments, when the image information is imported through an external terminal, the external terminal may be a terminal device such as a smartphone or a smart tablet. The external terminal stores image information to be printed, and the external terminal can be electrically connected to the main body 10 to import the image information.

Further, when importing the image information into the processing module through the external terminal, the method may further include: importing text information into the external terminal, and superimposing the text information onto original image information to form new image information.

It should be understood that importing text information through the external terminal can make the content of the finally printed photograph more diverse, and text information can be added according to the user's own will. The image information superimposed with the text information is printed into a photograph by the print head 20.

In some embodiments, the text information may also be directly input by the main body 10, such as inputting the text information on the printing region 61 through the touch screen 11.

In the present embodiment, after the step of analyzing, by the processing module, the printing parameter signal to obtain the printing control signal, the printing method further includes: editing the image information based on the printing control signal, so that the image information adapts to a shape of the printing region 61.

Specifically, the processing module edits the image information according to the shape and position parameters of the printing region 61 obtained from the printing control signal. For example, if the printing region 61 is elliptical, the image information is edited so that an outer contour of the image information is elliptical to fill the printing region 61, preventing the image information to be printed from being printed outside the printing region 61, which would cause loss of printed content.

Further, the method of editing the image information includes at least one of stretching the image information, compressing the image information, and cropping the image information.

Specifically, if the displayed range of the image information is too small, the image information can be stretched to adapt to the printing region 61. If the displayed range of the image information is too large and exceeds the range of the printing region 61, the image information can be compressed to reduce its display range to adapt to the printing region 61. If part of the image information exceeds the printing region 61, the image information can be cropped to remove the excess portion so that the image information adapts to the printing region 61. The editing of the image information may be performed using one of these methods, or a combination of multiple methods may be used according to the actual situation. The operation of editing the image information may be performed by the processing module using corresponding image processing algorithms.

In the present embodiment, after the step of printing and presenting the preset image information in the printing region 61, the printing method further includes: separating the printing region 61 from the body of the printing paper 60.

Specifically, the printing paper 60 may include a surface layer and a backing paper adhered to each other. The printing region 61 is detachably disposed in the surface layer. The surface layer and the backing paper constitute the body of the printing paper 60. The printing region 61 can be adhered to the surface layer of the printing paper 60 via the adhesive backing on its back side. After printing is completed, the printing region 61 can be removed from the surface layer of the printing paper 60, separating the printing region 61 from the body of the printing paper 60, and the printing region 61 can be adhered to a corresponding place, such as on a refrigerator to form a refrigerator sticker, or on a desk to form a photo sticker, etc., thereby improving the applicable scope of the printing region 61 and enhancing the user experience.

In summary, in the present embodiment, by arranging the printing paper recognizer 63 in the second mounting cavity 17 to recognize the corresponding identification code on the printing paper 60, the printing parameters of the printing region 61 of the printing paper 60 can be obtained, and the print head 20 can be controlled to print the image information within the printing region 61 according to the printing control signal, preventing the image information from being incorrectly printed outside the printing region 61. Whether the printing region 61 is regular or irregular, loss of printed content can be prevented, greatly enhancing the user experience.

Although the present invention has been described with reference to several exemplary embodiments, it should be understood that the terminology used is illustrative and exemplary rather than restrictive. Since the present invention can be embodied in various forms without departing from the spirit or essence of the invention, it should be understood that the above-described embodiments are not limited to any of the foregoing details, but should be broadly interpreted within the spirit and scope defined by the appended claims. Therefore, all changes and modifications falling within the scope of the claims or the equivalents thereof should be covered by the appended claims.

## Claims

1. An instant-imaging camera, comprising:
a main body, comprising a lens and an optical imaging module, the lens being configured to capture an optical image and transmit the optical image to the optical imaging module, the optical imaging module being configured to generate a corresponding image signal; wherein the main body comprises a first mounting cavity and a second mounting cavity defined therein;
one or more print heads, one of which is configured to be selectively installed in the first mounting cavity, is detachably connected to the first mounting cavity, is in a signal connection with the optical imaging module, and is configured to receive the image signal transmitted from the optical imaging module and print a corresponding image on a printing paper; and
a paper storage mechanism, disposed in the second mounting cavity, wherein the paper storage mechanism comprises a receiving chamber configured to accommodate and limit printing papers of different sizes, so as to secure the printing papers of different sizes in the paper storage mechanism.

2. The instant-imaging camera as recited in claim 1, wherein the paper storage mechanism comprises two or more paper storage cassettes, each of which being configured to be disposed in the second mounting cavity; wherein each of the two or more paper storage cassettes comprises the receiving chamber configured to accommodate and limit the printing paper installed in the paper storage mechanism, and the receiving chambers of different paper storage cassettes are configured to accommodate the printing papers of different sizes; and
wherein the print head installed in the first mounting cavity is disposed outside the two or more paper storage cassettes, wherein each of the two or more paper storage cassettes corresponds to a size of one print head, and the printing paper in the paper storage cassette is output out of the main body after passing through the print head.

3. The instant-imaging camera as recited in claim 2, wherein the paper storage cassette comprises a first paper storage cassette and a second paper storage cassette; wherein the first paper storage cassette is secured in the second mounting cavity of the main body and is configured to accommodate a printing paper of a first size, so that it matches the print head of the first size; wherein the second paper storage cassette is detachably connected to the main body and is configured to accommodate a printing paper of a second size, the first size being greater than the second size;

4. The instant-imaging camera as recited in claim 3, wherein the second paper storage cassette comprises a first connecting portion arranged thereon, the first connecting portion being a hole-shaped structure defined in the second paper storage cassette, wherein a plurality of the first connecting portions are provided, the first connecting portions on each second paper storage cassette have an equal size, and adjacent first connecting portions on each second paper storage cassette are equally spaced;
wherein the main body comprises a second connecting portion arranged thereon corresponding to each first connecting portion, the second connecting portion being a hole-shaped structure defined in the main body;
wherein the instant-imaging camera further comprises a first connecting piece; and wherein the first connecting piece is inserted and fixed into each first connecting portion and the corresponding second connecting portion, enabling the second paper storage cassette to be detachably connected in the first paper storage cassette.

5. The instant-imaging camera as recited in claim 1, wherein the paper storage mechanism comprises a blocking piece movably connected in the second mounting cavity, wherein the blocking piece is movable along an axial direction of the second mounting cavity, so that the blocking piece is configured to abut against and secure end surfaces of the printing papers of different sizes, thereby securing the printing papers of different sizes in the second mounting cavity.

6. The instant-imaging camera as recited in claim 5, wherein two blocking pieces are provided and are respectively disposed at two ends of the second mounting cavity in the axial direction, wherein a spacing between the two blocking pieces forms the receiving chamber, and the two blocking pieces respectively abut against two end surfaces of the printing paper in the receiving chamber to secure the printing paper.

7. The instant-imaging camera as recited in claim 5, wherein the blocking piece comprises a plate body, a mounting post connected to the plate body, and an elastic piece sleeved on the mounting post; wherein the mounting post extends along the axial direction of the second mounting cavity; wherein through holes matching the mounting post are defined in side walls at two ends of the second mounting cavity, and the mounting post is slidably connected in the through holes; wherein the mounting post is movable along the through holes; wherein the elastic piece abuts against a corresponding side wall of the second mounting cavity and the plate body, respectively; and wherein, after printing paper is loaded into the second mounting cavity, the plate body moves away from the corresponding side wall of the second mounting cavity, the elastic piece recovers from elastic deformation, and causes the plate body to abut against a corresponding end surface of the printing paper.

8. The instant-imaging camera as recited in claim 7, wherein the blocking piece further comprises a slider disposed on a side of the plate body facing towards a bottom wall of the second mounting cavity; and wherein a guide groove matching the slider is defined in the bottom wall of the second mounting cavity of the main body, and the slider is slidably connected in the guide groove.

9. The instant-imaging camera as recited in claim 8, wherein a plurality of sensing contacts are arranged in the guide groove, the sensing contacts being configured to identify position information of the plate body.

10. The instant-imaging camera as recited in claim 1, further comprising a second connecting piece; wherein a third connecting portion is arranged on the print head, and a fourth connecting portion corresponding to the third connecting portion is arranged in the first mounting cavity of the main body;
wherein the second connecting piece is inserted and fixed into the third connecting portion on the print head and the fourth connecting portion of the main body, so as to secure the print head in the first mounting cavity.

11. The instant-imaging camera as recited in claim 1, further comprising a compartment door, a paper ejection roller, and a serrated blade; wherein the compartment door comprises opposing first and second sides; wherein the first side of the compartment door is rotatably connected to the main body, and the second side of the compartment door is snap-fitted to the print head, so that the compartment door is operative to close openings of the first mounting cavity and the second mounting cavity; and wherein the second side of the compartment door is spaced apart from the main body to form a paper outlet;
wherein the paper ejection roller is rotatably disposed on an inner wall of the second side of the compartment door and is located at an edge of the paper outlet;
wherein a first gear is arranged on the print head, and a second gear matching the first gear is arranged on the paper ejection roller; and wherein the first gear on the print head meshes with the second gear on the paper ejection roller to drive the paper ejection roller to rotate, so that a printed photograph is sent out from the paper outlet; and
wherein the serrated blade is disposed on the second side of the compartment door, and is located at the edge of the paper outlet and configured to cut the printing paper.

12. The instant-imaging camera as recited in claim 1, wherein a pin for data transmission is arranged in the first mounting cavity of the main body, and a socket for data transmission is arranged on the print head; and wherein the pin and the socket are configured to be plugged into and electrically connected to each other, so that when the print head is secured in the first mounting cavity, the print head is electrically connected to the main body.

13. The instant-imaging camera as recited in claim 1, wherein a mounting seat is arranged on the main body, and a fifth connecting portion is arranged on the mounting seat; wherein the instant-imaging camera further comprises a lens, the lens comprising a lens body and a sixth connecting portion arranged on the lens body; and wherein the lens body is accommodated in the mounting seat, and the fifth connecting portion is engaged with the sixth connecting portion so that the lens is detachably connected to the main body.

14. The instant-imaging camera as recited in claim 13, wherein the mounting seat is a slot-shaped structure defined at a front end of the main body, the fifth connecting portion being an interlocking block structure disposed on a side wall of the mounting seat, wherein a gap is defined between the fifth connecting portion and a bottom wall of the mounting seat to form a mounting clamping position; wherein the lens body is accommodated in the mounting seat, and matching first conductive contacts are arranged between the lens body and the mounting seat; and wherein the sixth connecting portion is an interlocking block structure disposed on a side portion of the lens body, and the sixth connecting portion is snap-fitted into the mounting clamping position, so that the lens is detachably connected to the main body.

15. The instant-imaging camera as recited in claim 14, wherein a plurality of the fifth connecting portions are arranged on the side wall of the mounting seat at intervals along a circumferential direction thereof, and the plurality of fifth connecting portions and the bottom wall of the mounting seat form a plurality of the mounting clamping positions; and wherein a plurality of the sixth connecting portions are arranged on a side portion of the lens body in one-to-one correspondence with the plurality of mounting clamping positions, and wherein each of the sixth connecting portions is screwed into a corresponding mounting clamping position from between two adjacent mounting clamping positions.

16. The instant-imaging camera as recited in claim 14, further comprising an adapter, the adapter being accommodated in the mounting seat, the lens being disposed on the adapter, wherein two mutually conductive second conductive contacts are arranged on the adapter, the first conductive contact of the lens body matching one of the second conductive contacts on the adapter, and the other second conductive contact on the adapter matching the first conductive contact on the mounting seat; and wherein a seventh connecting portion is arranged on a side portion of the adapter, and the seventh connecting portion is operative to be engaged with the fifth connecting portion so that the adapter is detachably connected to the main body.

17. The instant-imaging camera as recited in claim 16, wherein the adapter comprises an adapter slot configured for accommodating the lens, an eighth connecting portion is arranged in the adapter slot, the eighth connecting portion being an interlocking block structure disposed on a side wall of the adapter slot, wherein a gap is defined between the eighth connecting portion and a bottom wall of the adapter slot to form an adapter clamping position, and wherein the sixth connecting portion is snap-fitted into the adapter clamping position so that the lens and the adapter are detachably connected to each other.

18. The instant-imaging camera as recited in claim 1, further comprising a battery, wherein a battery mounting compartment is disposed in the main body, wherein the battery is detachably accommodated in the battery mounting compartment; wherein a fixing piece is arranged at one end of the battery; wherein a clamping piece is arranged in the battery mounting compartment, the clamping piece being movable relative to the main body between an unlocking position and a locking position; and wherein the clamping piece is configured to, when in the locking position, clamp the fixing piece to lock the battery in the battery mounting compartment, and when in the unlocking position, disengage from the fixing piece to unlock the battery.

19. The instant-imaging camera as recited in claim 18, further comprising a telescopic piece disposed on an inner bottom of the battery mounting compartment, wherein the telescopic piece is operative to extend and retract along an axial direction of the battery, and wherein the clamping piece is connected to the telescopic piece so as to be movable between the unlocking position and the locking position.

20. The instant-imaging camera as recited in claim 19, wherein a guide channel is defined in the inner bottom of the battery mounting compartment, the guide channel extending along the axial direction of the battery, wherein the telescopic piece is slidably disposed in the guide channel, and the clamping piece is an elastic arm structure connected to an outer end of the telescopic piece; wherein when the clamping piece is in the locking position, the clamping piece is pressed by an inner edge of the guide channel to tightly abut against the fixing piece; and wherein when the clamping piece is in the unlocking position, the clamping piece expands open in a direction away from the fixing piece to disengage from the fixing piece.

21. An instant-imaging system, comprising:
the instant-imaging camera as recited in claim 1;
a printing paper, disposed in the receiving chamber of the paper storage mechanism, wherein the printing paper comprises a printing region and an identification code, the printing region being configured to present content corresponding to the image information;
a printing paper recognizer, disposed on the second mounting cavity and configured to read the identification code and obtain, based on the identification code, a printing parameter signal of the printing region in a current printing paper; and
a processing module, disposed in the main body and electrically connected to the printing paper recognizer to receive the printing parameter signal, and configured to generate a printing control signal based on the printing parameter signal, so as to control, based on the printing control signal, the print head to print and present content corresponding to the image information into the printing region.

22. The instant-imaging system as recited in claim 21, wherein the printing paper comprises a surface layer and a backing paper adhered to each other, and the printing region is detachably disposed in the surface layer;
wherein the printing paper comprises one or more identification regions, the identification code is disposed in the one or more identification regions, and the one or more identification regions cover or partially cover the printing region;
or, wherein the printing paper comprises an identification region spaced apart from the printing region, the identification code is disposed in the identification region, at least two identification regions are provided, and the at least two identification regions are located on opposite sides of the printing region.

23. The instant-imaging system as recited in claim 22, wherein two or more identification codes are disposed in each of the identification regions.

24. A printing method for an instant-imaging system, implemented by the instant-imaging system as recited in any one of claims 21 to 23, the printing method comprising:
obtaining, by a processing module, image information;
recognizing, by a printing paper recognizer, an identification code on a printing paper to obtain a printing parameter signal, and transmitting the printing parameter signal to the processing module;
in response to receiving the printing parameter signal, analyzing, by the processing module, the printing parameter signal to obtain a printing control signal; and
controlling, by the processing module, a print head to print, based on the printing control signal, content matching the image information in a printing region of the printing paper.

25. The printing method as recited in claim 24, wherein the operation of obtaining image information by the processing module comprises:
capturing, by a lens, an optical image and transmitting the optical image to an optical imaging module;
forming, by the optical imaging module, corresponding image information and transmitting the image information to the processing module; and/or
importing, by an external terminal, image information into the processing module.

26. The printing method as recited in claim 25, wherein the operation of importing image information into the processing module by an external terminal comprises:
importing text information into the external terminal, and superimposing the text information onto original image information to form new image information.

27. The printing method as recited in claim 24, further comprising the following operation subsequent to analyzing by the processing module the printing parameter signal to obtain the printing control signal:
editing the image information based on the printing control signal, so that the image information adapts to a shape of the printing region.

28. The printing method as recited in claim 27, wherein the operation of editing the image information comprises at least one selected from the group consisting of stretching the image information, compressing the image information, and cropping the image information.

29. The printing method as recited in claim 24, further comprising the following operation subsequent to the operation of printing and presenting the preset image information in the printing region:
separating the printing region from a body of the printing paper.

30. The printing method as recited in claim 24, wherein the printing parameter signal comprises a shape parameter signal and a position parameter signal of the printing region.
